# EUROPÄISCHE PATENTSCHRIFT

(11) **EP 0 630 474 B1**
(45) Veröffentlichungstag und Bekanntmachung des Hinweises auf die Patenterteilung: **01.04.1998**
(21) Anmeldenummer: 93905251.0
(22) Anmeldetag: 16.02.1993
(51) Int. Cl.: G01N 27/407

(54) **GEHÄUSE FUR GASSENSOREN**
HOUSING FOR GAS SENSORS
BOITIER POUR CAPTEURS DE GAZ

(30) Priorität: 18.02.1992 DE 4204850
(43) Veröffentlichungstag der Anmeldung: 28.12.1994
(73) Patentinhaber: Heraeus Electro-Nite International N.V., 3530 Houthalen (BE)
(72) Erfinder: HÄFELE, Edelbert, D-7500 Karlsruhe (DE); SEEGER, Walter, D-7560 Gaggenau (DE)
(74) Vertreter: Kühn, Hans-Christian
(86) Internationale Anmeldenummer: EP9300376
(87) Internationale Veröffentlichungsnummer: WO9316379

(56) Entgegenhaltungen:
- EP-A- 0 087 626
- EP-A- 0 415 007
- DE-A- 3 410 122

## Beschreibung

Die Erfindung betrifft ein Gehäuse für Gassensoren gemäß dem Oberbegriff des Hauptanspruches.

Ein solches Gehäuse ist bekannt (DE-34 10 122 A1).

Von Nachteil bei diesem bekannten Gehäuse sind jedoch dessen viele Einzelteile, die eine aufwendige und damit teure Montage zur Folge haben. Das Gehäuse weist zwar ein zweigeteiltes Keramikformteil auf; dieses ist jedoch in einer Ebene geteilt, die senkrecht zur Achse des Gesamtgehäuses verläuft. Hierdurch bedingt ergibt sich eine Montage in Achsrichtung. Dadurch werden die Kontaktklemmen auf das Plättchen aufgeschoben, wodurch sich eine Kerbwirkung und Gefahr von Beschädigung des das eigentliche Sensorelement tragenden Plättchens ergeben. Viele gesonderte Halteteile für die Lagerung des Plättchens und gesonderte elektrische Anschlüsse tragen zur aufwendigen Montage bei.

Der Erfindung liegt deshalb die Aufgabe zugrunde, ein gattungsgemäßes Gehäuse für Gassensoren gemäß dem Oberbegriff des Hauptanspruches einfacher sowie problemloser montierbar auszugestalten.

Diese Aufgabe wird bei einem gattungsgemäßen Gehäuse dem Oberbegriff des Hauptanspruches erfindungsgemäß durch dessen kennzeichnende Merkmale in überraschend einfacher Weise gelöst.

Infolge der Tatsache, daß das Keramikformteil aus ähnlich vorzugsweise nur zwei Teilstücken besteht, ist der Herstellungsaufwand einfacher. Zwischen die Keramikformteile wird dann das Plättchen eingesetzt sowie die in die offenen Schlitze eingesetzten Kontaktelemente. Beim Zusammenfügen der Keramikformteile werden diese im Gegensatz zum Stand der Technik radial aufeinandergesetzt und in diesem Zustand fertigmontiert. Relativbewegungen, wie beispielsweise das Aufschieben der Kontaktelemente auf das Plättchen sind bei der Erfindung nicht vorhanden, so daß die Gefahr von Beschädigungen bei der Montage weitestgehend ausscheidet. Insgesamt ergibt sich also ein einfach und problemlos zu montierendes Gehäuse bei zugleich wenig Ausschuß.

Damit Fehlmessungen sowohl im Überdruckbereich (zum Beispiel in einem Abgasrohr) bzw. Unterdruckbereich (zum Beispiel Rauchgasrohr in der Heizungstechnik und Analyseleitungen) gegen jeweils Falschluft ausgeschlossen sind, wird die eigentliche Meßstelle, nämlich der vordere Teil des Plättchens von dem hinteren Teil des Gehäuses gasdicht voneinander getrennt. Vorzugsweise kann dies außen durch zwei zur Anlage aneinanderkommenden konischen Dichtflächen erzielt werden. Es können auch zusätzlich Dichtlippen und/oder Dichtringe vorgesehen sein, welche beim Anpressen des Konus an die konische Innenfläche der Eindrehbuchse für hinreichende Gasdichtigkeit sorgen. Die Dichtheit zwischen dem Konus und dem Plättchen kann durch Verkleben, Verglasen oder mit Pulverfüllung (Keramikpulver) mit dem Konus, vorzugsweise in trichterförmig ausgebildeten Vertiefungen im Bereich des Austritts des aufzunehmenden Plättchens erreicht.

Von ganz besonderem Vorteil ist es, wenn der noch nicht vollständig fertiggestellte Gassensor ohne störende elektrische Anschlüsse in Form von Kabeln getestet und montiert bzw. ein individueller Anschluß je nach spezifischer Anforderung des Anwenders vorgesehen werden kann, wodurch das Handhaben und die Abstimmung auf bestimmte Anforderungen des Anwenders erleichtert ist. Erst nach Teilzusammenbau, Testen etc. kann dann das Gehäuse dadurch fertiggestellt werden, daß die über die eine Seite des Teilstücks vorspringenden Bereiche der Kontaktelemente mit den elektrischen Anschlüssen eine Steckvorrichtung integriert in einem separaten Schutzgehäuse mit Tülle auf gesonderten Anschlußkabeln aufgesteckt oder - geschoben wird. Die Fertigstellung erfolgt dann entweder beim Hersteller oder beim Anwender nach Montage der Sonde. Danach wird das gesonderte Schutzgehäuse mit dem schon montierten Schutzgehäuse, beispielsweise durch Verpressen, Schweißen, Schrauben, speziellen Klemmvorrichtungen oder dergleichen hergestellt.

Zweckmäßige Ausgestaltungen und Weiterbildungen der Erfindung sind in den Unteransprüchen gekennzeichnet.

Ein bevorzugtes Ausführungsbeispiel wird nachfolgend unter Bezugnahme auf die Zeichnung näher erläutert. In dieser zeigt:
- Figur 1: eine erste Ausführungsform des Gehäuses mit eingesetzten Kontaktelementen und das Sensorelement tragendem Plättchen, im schematischen Halbschnitt,
- Figur 2: ein Teilstück des Keramikformteils gemäß Fig. 1, in schematischer Draufsicht; und
- Figur 3: ein Kontaktelement gemäß Fig. 1, im teilweise abgebrochenen Zustand.

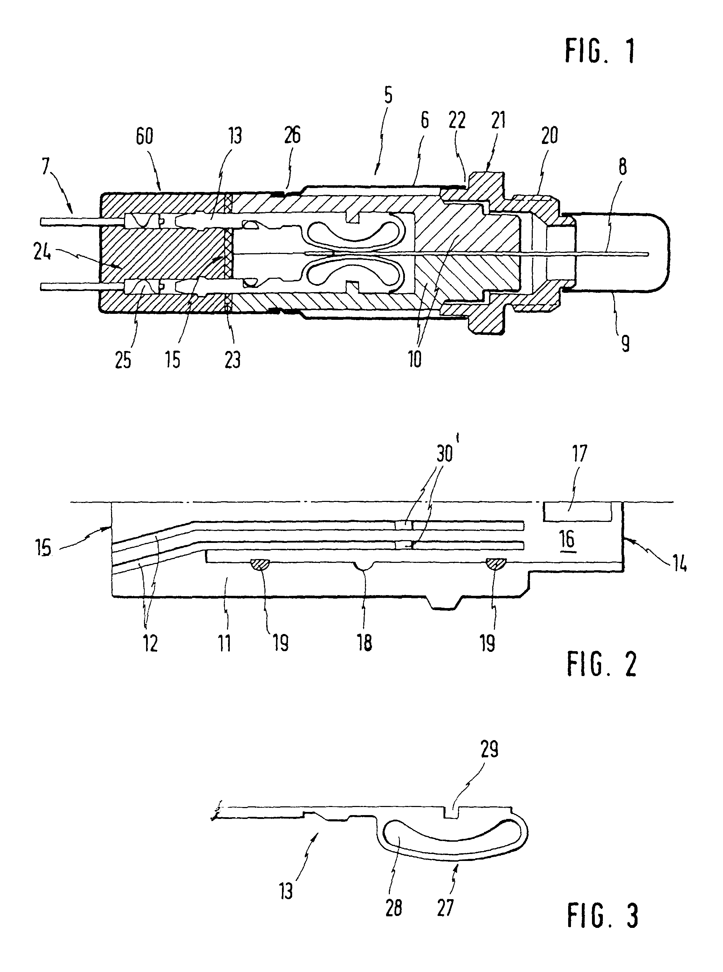

Das in Fig. 1 insgesamt mit 5 bezeichnete Gehäuse für einen Gassensor weist ein äußeres Schutzgehäuse 6 auf, an dessen einem Ende elektrische Anschlüsse 7 für das auf einem Plättchen 8 angebrachte eigentliche Sensorelement. An dessen anderem Ende ist das Plättchen 8 mit dem Sensorelement (nicht gezeigt) unter einer dem zu messenden Gasstrom auszusetzenden, perforierten Schutzhaube 9 angeordnet. Ferner ist in dem Schutzgehäuse 6 ein insgesamt mit 10 bezeichnetes Keramikformteil für die elektrischen Anschlüsse und/oder das Plättchen vorgesehen.

Erfindungsgemäß besteht das Keramikformteil 10 aus - beim wiedergegebenen Ausführungsbeispiel zwei identischen Teilstücken 11 (Fig. 2), das in Fig. 2 in Draufsicht auf die Trennebene (entspricht der Zeichenebene) dargestellt ist. Das Teilstück 11 weist an seinem einen Ende an dieser Seite einseitig offene Schlitze 12 auf, in diese über diese offene Seite vorspringende, von drei Seiten des Schlitzes unverückbar gehaltene Kontaktelemente 13 (Fig. 3) eingesetzt sind.

Ferner weisen die Teilstücke 11 eine bis zu ihrem anderen Ende 14 (gegenüberliegend dem einen Ende 15) reichende, sowie an die Form des Plättchens 8 angepaßte Vertiefungen 16 zur Aufnahme und Lagerung des Plättchens 8 auf.

Hierbei sind zumindest die über die eine Seite 15 des Teilstücks 11 vorspringenden Bereiche der Kontaktelemente 13 im Bereich der Vertiefung 16 angeordnet und sowohl das Plättchen 8 klemmend zwischen zwei Vertiefungen 16 der beiden das Keramikformteil 10 bildenden Teilstücke 11 gehalten als auch das darauf befindliche Sensorelement zugleich elektrisch leitend angeschlossen ist. Nachdem die elektrischen Anschlüsse 7, vorzugsweise durch eine Krimpverbindung mit den Kontaktelementen 13 verbunden sind, ist auch der elektrische Anschluß in einfachster Weise hergestellt. Hierbei ist von besonderem Vorteil, daß die Kontaktelemente so ausgebildet sind, daß sie an beiden Seiten des Plättchens 8 anliegen, also auch eine Vielzahl von nebeneinander liegenden Kontaktelementen und damit elektrischen Anschlüssen 7 gestattet. Zugleich ist die gleichmäßige mechanische Belastung des Plättchens aufgrund der beidseitigen Kontaktelemente sichergestellt.

Die beiden identischen Teilstücke 11 des Keramikformteils 10 sind hierbei von einer als Hülse aus Metall ausgebildeten Schutzgehäuse 6 unverrückbar in ihrer Lage gehalten. Hierbei weist jedes der beiden Teilstücke 11 eine Trennfläche (Zeichenebene gemäß Fig. 2) auf, die beide im montierten Zustand zwischen sich das Plättchen 8 und die Kontaktelemente 13 aufnehmen, wobei im Bereich der Vertiefung 16 außerhalb des Bereichs der Schlitze eine Klebstoffaufnahme 17 in Form einer Senke vorgesehen ist. Weiterhin weist jedes Teilstück 11 Führungsnasen 18 auf, die in ein diesen angepaßten Führungsloch des anderen Teilstücks - und umgekehrt - eingreifen. Vorzugsweise kann unterhalb des äußeren Schutzgehäuses 6 ein Haltering zum Haltern der beiden Teilstücke 11 des Keramikformteils 10 vorgesehen sein, der als Federring, geschlitzte oder aufgeschrumpfte Hülse ausgebildet ist.

Ferner weist das Gehäuse 5 eine mit einem Gewinde 20 versehene Eindrehbuchse 21 auf, über die die insgesamt mit 9 bezeichnete Schutzhaube hervorsteht, wobei das äußere Schutzgehäuse 6 an der Eindrehbuchse 21 festgelegt, vorzugsweise im Bereich 22 angeschweißt ist.

An das Schutzgehäuse 6 schließt sich vorzugsweise über ein Federpaket 23 eine Tülle 24 an, in der die elektrischen Anschlüsse 7 an die Kontaktelemente 13 mittels einer Steckverbindung 25 vorhanden sind. Hierbei kann die Schutzhülle 6 die Tülle 24 mitumfassen, oder aber für diesen Bereich ein gesondertes Schutzgehäuse 60 vorgesehen sein, welches im Bereich 26 mit dem eigentlichen Schutzgehäuse 6 durch Falzen, Schweißen oder durch Kleben verbunden ist.

Infolge der über die eine Seite 15 des Teilstücks 11 vorspringende Bereiche der Kontaktelemente 13 kann der Gassensor ohne störende elektrische Anschlüsse in Form von Kabeln getestet, montiert und ansonsten fertiggestellt werden, wodurch das Handling erleichtert ist. Nur zur Endmontage wird die Tülle aufgesetzt, die Verbindung 25 hergestellt und das gesonderte Schutzgehäuse 60 mit dem Schutzgehäuse 6 verbunden.

Das Kontaktelement 13 weist einen rückwärtigen, über die offene vierte Seite der Schlitze 12 vorspringenden, eigentlichen Vorsprung 27 auf, der federnd nachgiebig durch einen etwa bogenförmig ausgestanzten Bereich 28 ausgebildet ist. Die federnde Nachgiebigkeit kann auch dadurch realisiert werden, indem das Kontaktelement 13 geschlitzt ausgeführt ist. Ferner weist das Kontaktelement 13 zum unverrückbaren Haltern in dem Schlitz 12 eine Ausstanzung 29 auf, in die ein Vorsprung 30 in dem Schlitz 12 jedes Teilstücks 11 des Keramikformteils 10 eingreift.

Diese Ausführungsform für ein Gehäuse kann aber noch variiert werden. So können die beiden Keramikformteile nicht identisch, sondern nur ähnlich ausgebildet sein und werden mittels eines Halterings zusammengehalten sind. Außerdem kann an dem anderen Ende des Keramikformteils ein damit verbundener Konus vorgesehen sein, der gegen die mit einer daran angepaßten konischen Innenfläche der Eindrehbuchse dichtend zur Anlage gebracht werden kann, um Eintritt von Falschluft zur eigentlichen Meßstelle unter der Schutzhaube zu verhindern. Ferner wird zweckmäßig im Bereich des Austritts des Plättchens 8 an beiden Enden des Konus eine trichterförmige Vertiefung vorgesehen. Mittels dieser Vertiefungen läßt sich eine gasdichte Verbindung durch Verkleben, Verglasen oder mit Pulverfüllung (Keramik) und Dichtmaterial erreichen.

Ferner kann der Konus mit dem Kerarnikformteil über eine Abstandshülse verbunden sein.

Weiterhin wird das Kontaktelement nicht durch Stanzen, sondern durch gebogenen Federstahl hergestellt und weist einen Bügel auf, mittels dem es sich an dem Vorsprung 30 in dem Schlitz 12 des Teilstücks 11 sich abstützt. Auf der anderen Seite des Vorsprungs 30 liegt das Ende einer elektrischen Verbindungshülse an, so daß das Kontaktelement 13 insgesamt gegen Verschieben gesichert in dem Schlitz 12 gehaltert ist.

## Patentansprüche

1. Gehäuse (5) für Gassensoren, vorzugsweise Lambda-Sonde zur Ermittlung des Schadstoff- und/oder Sauerstoffanteils im Abgas von vorzugsweise Verbrennungsmotoren, mit einem äusseren Schutzgehäuse (6), an dessen einem Ende (15) elektrische Anschlüsse (7) für die auf einem Plättchen (8) angebrachten Sensorelemente und an dessen anderem Ende (14) die Sensorelemente unter einer dem zu messenden Gasstrom auszusetzenden, perforierten Schutzhaube (9) angeordnet sind, und mit einem in dem Schutzgehäuse (6) angeordneten Keramikformteil (10), in welchem Kontaktelemente vorgesehen sind, die die Anschlüsse (7) mit den Kontaktflächen für das Plättchen (8) elektrisch leitend verbinden,
dadurch gekennzeichnet,
dass das Keramikformteil (10) parallel zur Achse des Gehäuses geteilt ist und somit aus zwei Teilstücken (11) besteht,
dass beide Teilstücke (11) an ihrem einen Ende (15) einseitig offene Schlitze (12) und Vertiefungen (16) aufweisen,
dass in diese zwei Teilstücke (11) über die offene-vierte-Seite vorspringende, von drei Seiten des Schlitzes (12) unverrückbar gehaltene Kontaktelemente (13) eingesetzt sind,
dass die zwei Teilstücke (11) die bis zu ihrem anderen Ende (14) reichende, an die Form des Plättchens (8) angepasste Vertiefung (16) zur Lagerung und Aufnahme des Plättchens aufweisen,
dass zumindest die vorspringenden Bereiche der Kontaktelemente (13) der beiden Teilstücke einander gegenüberliegen und im Bereich der Vertiefung (16) angeordnet sind und sowohl das Plättchen (8) klemmend halten als auch das darauf befindliche Sensorelement zugleich elektrisch leitend verbinden,
dass die Kontaktelemente (13) auf ihrem den Anschlüssen zugewandten Ende mit den elektrischen Anschlüssen (7) versehbar sind.
dass jedes der beiden Teilstücke (11) eine Trennfläche aufweist, die beide im montierten Zustand zwischen sich das Plättchen (8) und die Kontaktelemente (13) aufnehmen.
dass das Kontaktelement (13) einen rückwärtigen Anschlussbereich (30) und einen sich daran anschliessenden Kontaktbereich (27) aufweist.

2. Gehäuse nach Anspruch 1, dadurch gekennzeichnet, dass das Schutzgehäuse (6) als Hülse aus einem temperaturstabilen Werkstoff ausgebildet ist.

3. Gehäuse nach Anspruch 2, dadurch gekennzeichnet, dass der temperaturstabile Werkstoff Metall ist.

4. Gehäuse nach einem der Ansprüche 1 oder 3, dadurch gekennzeichnet, dass das Keramikformteil (10) aus zwei in ihrem Zusammenfügebereich gleichartigen oder identischen Teilstücken (11) besteht.

5. Gehäuse nach einem der Ansprüche 1 bis 4, dadurch gekennzeichnet, dass jedes Teilstück (11) Führungs- sowie Haltenasen (18) für das Plättchen sowie zur Halterung der Teilstücke (11) zueinander aufweist.

6. Gehäuse nach Anspruch 5, dadurch gekennzeichnet, dass die Führungsnasen (18) des einen Teilstücks (11) in entsprechende Führungslöcher (19) des anderen Teilstücks - im montierten Zustand - eingreifen.

7. Gehäuse nach einem der Ansprüche 1 bis 6, dadurch gekennzeichnet, dass die beiden Teilstücke (11) mittels eines Halterings (43) gehalten werden.

8. Gehäuse nach Anspruch 7, dadurch gekennzeichnet, dass der Haltering als Federring, geschlitzte Hülse oder aufgeschrumpfte Hülse ausgebildet ist.

9. Gehäuse nach einem der Ansprüche 1 bis 8, dadurch gekennzeichnet, dass das Gehäuse eine mit einem Gewinde (20) versehene Eindrehbuchse (21) für den Gassensor aufweist und zur Aufnahme der Schutzhaube (8) dient.

10. Gehäuse nach Anspruch 9, dadurch gekennzeichnet, dass das Schutzgehäuse (6) an der Eindrehbuchse (21) festgelegt ist.

11. Gehäuse nach Anspruch 1, dadurch gekennzeichnet, dass der Kontaktbereich (27) ein über die offene - vierte - Seite der Schlitze (12) vorspringenden, eigentlichen Vorsprung (27) aufweist und in diesem Bereich der Kontaktbereich federnd nachgiebig ausgebildet ist.

12. Gehäuse nach einem der Ansprüche 1 bis 11, dadurch gekennzeichnet, dass der Kontaktbereich (27) nachgiebig federnd ausgebildet ist.

13. Gehäuse nach einem der Ansprüche 1 bis 12, dadurch gekennzeichnet, dass der Schlitz (12) zumindest einen Vorsprung (30) des Teilstücks (11) auf seinem Grund zum unverrückbaren Haltern des Kontaktelements (13) mit entweder einer an diesem vorgesehenen Ausstanzung (29) oder einem Bügel aufweist.

14. Gehäuse nach einem der Ansprüche 1 bis 13, dadurch gekennzeichnet, dass das Teilstück (11) an seinem anderen Ende einen damit einstückig verbundenen oder gesonderten und damit verbindbaren Konus aufweist, der gegen die mit einer daran angepassten konischen Innenfläche der Eindrehbuchse (21) dichtend zur Anlage bringbar ist.

15. Gehäuse nach Anspruch 14, dadurch gekennzeichnet, dass der Konus an seinen beiden Enden im Bereich des Austritts des aufzunehmenden Plättchens (8) Vertiefungen aufweist.

16. Gehäuse nach Anspruch 15, dadurch gekennzeichnet, dass die Vertiefungen trichterförmig ausgebildet sind.

17. Gehäuse nach einem der Ansprüche 1 bis 16, dadurch gekennzeichnet, dass die beiden Teilstücke (11) und der Konus mittels des Halterings gehalten sind.

## Claims

1. A housing (5) for gas sensors, preferably a lambda probe for determining the quota of harmful substances and/or oxygen in the exhaust gas of preferably internal combustion engines, with an outer protective housing (6), at one end (15) of which electrical connections (7) are arranged for the sensor elements arranged on a small plate (8) and at the other end (14) of which the sensor elements are arranged under a perforated protective cover (9) to be exposed to the gas stream which is to be measured, and with a ceramic shaped part (10) arranged in the protective housing (6), in which shaped part (10) contact elements are provided which connect in an electrically conducting manner the connections (7) with the contact faces for the small plate (8),
characterised in that
the ceramic shaped part (10) is divided parallel to the axis of the housing and hence consists of two part pieces (11),
the two part pieces (11) have at their one end (15) slits (12) open on one side, and depressions (16),
contact elements (13), projecting over the open - fourth-side, held immovably by three sides of the slit (12), are inserted into these two part pieces (11),
the two part pieces (11) have the depression (16), extending up to their other end (14) and adapted to the shape of the small plate (8), for bearing and receiving the small plate,
at least the projecting regions of the contact elements (13) of the two part pieces lie opposite each other and are arranged in the region of the depression (16) and both hold the small plate (8) in a clamping manner and also at the same time connect in an electrically conducting manner the sensor element situated thereon,
the contact elements (13) are able to be provided with the electrical connections (7) on their end facing the connections,
each of the two part pieces (11) has a joint face which both receive between them in mounted state the small plate (8) and the contact elements (13),
the contact element (13) has a rearward connection region (30) and a contact region (27) adjoining thereto.

2. The housing according to Claim 1, characterised in that the protective housing (6) is constructed as a casing of a material which is stable with regard to temperature.

3. The housing according to Claim 2, characterised in that the material which is stable with regard to temperature is metal.

4. The housing according to one of Claims 1 or 3, characterised in that the ceramic shaped part (10) consists of two part pieces (11) which are similar or identical in their joining region.

5. The housing according to one of Claims 1 to 4, characterised in that each part piece (11) has guiding- and holding noses (18) for the small plate and also for holding the part pieces (11) to each other.

6. The housing according to Claim 5, characterised in that the guide noses (18) of the one part piece (11) engage into corresponding guide holes (19) of the other part piece - in the mounted state -.

7. The housing according to one of Claims 1 to 6, characterised in that the two part pieces (11) are held by means of a holding ring (43).

8. The housing according to Claim 7, characterised in that the holding ring is constructed as a spring ring, slitted casing or shrunk-on casing.

9. The housing according to one of Claims 1 to 8, characterised in that the housing has a tapped bush (21) provided with a thread (20) for the gas sensor and serves to receive the protective cover (8).

10. The housing according to Claim 9, characterised in that the protective housing (6) is secured on the tapped bush (21).

11. The housing according to Claim 1, characterised in that the contact region (27) has an actual projection (27) projecting over the open - fourth - side of the slits (12) and in this region the contact region is constructed so as to be resiliently flexible.

12. The housing according to one of Claims 1 to 11, characterised in that the contact region (27) is constructed so as to be resiliently flexible.

13. The housing according to one of Claims 1 to 12, characterised in that the slit (12) has at least one projection (30) of the part piece (11) on its base for the immovable securing of the contact element (13) with either a punched-out section (29) provided thereon or with a bracket.

14. The housing according to one of Claims 1 to 13, characterised in that the part piece (11) has at its other end a cone which is connected therewith in one piece or is separate and connectable therewith, which is able to be brought to lie in a sealing manner against the conical inner face of the tapped bush (21) adapted thereto.

15. The housing according to Claim 14, characterised in that the cone has depressions at its two ends in the region of the emergence of the small plate (8) which is to be received.

16. The housing according to Claim 15, characterised in that the depressions are constructed in a funnel shape.

17. The housing according to one of Claims 1 to 16, characterised in that the two part pieces (11) and the cone are held by means of the holding ring.

## Revendications

1. Boîtier (5) pour des détecteurs de gaz, de préférence pour sonde lambda destinée à détecter la part de substances nocives et/ou d'oxygène dans le gaz d'échappement de moteurs, de préférence de moteurs à combustion interne, comportant un boîtier de protection extérieur (6) dont une extrémité (15) présente des connexions électriques (7) pour les éléments détecteurs agencés sur une plaquette (8) et dont l'autre extrémité (14) présente les éléments détecteurs agencés au-dessous d'un capuchon de protection perforé (9) à exposer au courant de gaz à mesurer, et comportant une pièce moulée en céramique (10) agencée dans le boîtier de protection (6), dans laquelle sont prévus des éléments de contact qui relient de façon électriquement conductrice les connexions (7) aux surfaces de contact pour la plaquette (8),
caractérisé en ce que :
- la pièce moulée en céramique (10) est divisée parallèlement à l'axe du boîtier et est constituée par deux éléments partiels (11),
- les deux éléments partiels (11) présentent à l'une de leurs extrémités (15) des fentes ouvertes unilatéralement (12) et des renfoncements (16),
- des éléments de contact (13) retenus de façon inamovible par trois côtés de la fente (12) et dépassant le quatrième côté ouvert sont mis en place dans ces deux éléments partiels (11),
- les deux éléments partiels (11) présentent le renfoncement qui s'étend jusqu'à leur autre extrémité (14) et qui est adapté à la forme de la plaquette (8), pour recevoir et retenir la plaquette,
- au moins les régions en saillie des éléments de contact (13) des deux éléments partiels se trouvent en vis-à-vis l'une de l'autre et sont agencées dans la région du renfoncement (16), et retiennent avec serrage la plaquette (8) et relient simultanément de façon électriquement conductrice l'élément détecteur situé sur celle-ci,
- les éléments de contact (13) sont susceptibles d'être pourvus des connexions électriques (7) à leur extrémité orientée vers les connexions,
- chacun des deux éléments partiels (11) présente une surface de séparation, qui reçoivent toutes les deux entre elles, à l'état monté, la plaquette (8) et les éléments de contact (13),
- l'élément de contact (13) présente une région de raccordement arrière (30) et une région de contact (27) qui s'y raccorde.

2. Boîtier selon la revendication 1, caractérisé en ce que le boîtier de protection (6) est réalisé sous forme d'une douille en un matériau résistant à la température.

3. Boîtier selon la revendication 2, caractérisé en ce que le matériau résistant à la température est du métal.

4. Boîtier selon l'une ou l'autre des revendications 1 et 3, caractérisé en ce que la pièce moulée en céramique (10) est constituée par deux éléments partiels (11) qui sont similaires ou identiques dans leur région d'assemblage.

5. Boîtier selon l'une quelconque des revendications 1 à 4, caractérisé en ce que chaque élément partiel (11) présente des becs de guidage et de retenue (18) pour la plaquette et pour retenir les éléments partiels (11) l'un par rapport à l'autre.

6. Boîtier selon la revendication 5, caractérisé en ce que les becs de guidage (18) de l'un des éléments partiels (11) s'engagent dans des trous de guidage correspondants (19) de l'autre élément partiel, à l'état monté.

7. Boîtier selon l'une quelconque des revendications 1 à 6, caractérisé en ce que les deux éléments partiels (11) sont retenus au moyen d'un anneau de retenue (43).

8. Boîtier selon la revendication 7, caractérisé en ce que l'anneau de retenue est réalisé sous forme d'un anneau élastique, d'une douille fendue ou d'un manchon rétractable.

9. Boîtier selon l'une quelconque des revendications 1 à 8, caractérisé en ce que le boîtier présente une douille (21) pourvue d'un filetage (20) pour le détecteur de gaz, et en ce qu'il sert à recevoir le capuchon de protection (8).

10. Boîtier selon la revendication 9, caractérisé en ce que le boîtier de protection (6) est fixé sur la douille filetée (21).

11. Boîtier selon la revendication 1, caractérisé en ce que la région de contact (27) présente une saillie (27) proprement dite en saillie au-delà du quatrième côté ouvert des fentes (12), et en ce que la région de contact est réalisée avec flexibilité élastique dans cette région.

12. Boîtier selon l'une quelconque des revendications 1 à 11, caractérisé en ce que la région de contact (27) est réalisée avec flexibilité élastique.

13. Boîtier selon l'une quelconque des revendications 1 à 12, caractérisé en ce que la fente (12) présente sur son fond au moins une saillie (30) de l'élément partiel (11) pour la retenue inamovible de l'élément de contact (13), présentant soit une découpe (29) prévue sur celui-ci, soit un étrier.

14. Boîtier selon l'une quelconque des revendications 1 à 13, caractérisé en ce que l'élément partiel (11) présente à son autre extrémité un cône relié en une seule pièce à celui-ci ou bien séparé et susceptible d'être relié à celui-ci, qui peut être amené en appui étanche contre la douille filetée (21) par une surface intérieure conique adaptée à celui-ci.

15. Boîtier selon la revendication 14, caractérisé en ce que le cône présente à ses deux extrémités des renfoncements dans la région de la sortie de la plaquette (8) à recevoir.

16. Boîtier selon la revendication 15, caractérisé en ce que les renfoncements sont réalisés en forme d'entonnoir.

17. Boîtier selon l'une quelconque des revendications 1 à 16, caractérisé en ce que les deux éléments partiels (11) et le cône sont retenus au moyen de l'anneau de retenue.
